(19) **Europäisches Patentamt**
**European Patent Office**
**Office européen des brevets**

(11) **EP 4 416 472 B1**

(12) **EUROPÄISCHE PATENTSCHRIFT**

(45) Veröffentlichungstag und Bekanntmachung des Hinweises auf die Patenterteilung:
**01.10.2025  Patentblatt 2025/40**

(51) Internationale Patentklassifikation (IPC):
**G01K 3/10** (2006.01)     **G01K 13/00** (2021.01)
**H02B 13/065** (2006.01)

(21) Anmeldenummer: **22801817.2**

(22) Anmeldetag: **14.10.2022**

(52) Gemeinsame Patentklassifikation (CPC):
**G01K 3/10; G01K 13/00; H02B 13/065;** H02B 1/305

(86) Internationale Anmeldenummer:
**PCT/EP2022/078667**

(87) Internationale Veröffentlichungsnummer:
**WO 2023/094074 (01.06.2023 Gazette 2023/22)**

(54) **VERFAHREN ZUM BETREIBEN EINER SCHALTANLAGE UND SCHALTANLAGE**

METHOD FOR OPERATING SWITCHGEAR, AND SWITCHGEAR

PROCÉDÉ DE FONCTIONNEMENT D'UN APPAREILLAGE DE COMMUTATION ET APPAREILLAGE DE COMMUTATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **25.11.2021  DE 102021213290**

(43) Veröffentlichungstag der Anmeldung:
**21.08.2024  Patentblatt 2024/34**

(73) Patentinhaber: **Siemens Aktiengesellschaft 80333 München (DE)**

(72) Erfinder:
- **AUMANN, Erhard 67550 Worms (DE)**
- **MLADENOVIC, Ivana 90556 Seukendorf (DE)**
- **SCHÖNAU, Maximilian 96450 Coburg (DE)**

(74) Vertreter: **Siemens Patent Attorneys Postfach 22 16 34 80506 München (DE)**

(56) Entgegenhaltungen:
WO-A1-2020/187778       CN-A- 111 562 477
DE-A1- 102019 204 307

**Beschreibung**

Die Erfindung bezieht sich auf eine Schaltanlage, insbesondere für Mittel- und/oder Hochspannungen.

Eine häufig in Erscheinung tretende Fehlerquelle in einer Schaltanlage stellen die in der Schaltanlage befindlichen Schraubverbindungen dar, insbesondere solche, die erst auf der Baustelle montiert werden. Die Verschraubung an der Sammelschiene und am Hochspannungskabel spielen dabei eine wichtige Rolle. Diese Schraubverbindungen können sich im Laufe des Betriebes verschlechtern, wodurch eine zusätzliche lokale Erwärmung entsteht, die schließlich zu einem Fehler führen kann. Eine frühzeitige Identifikation einer solchen Fehlerstelle kann zur vorrausschauenden Fehlerbehebung eingesetzt werden.

Aus der US 2017/0148300 A1 ist bekannt, Werte für die absolute Temperatur zwischen den einzelnen Phasen der Schaltanlage zu vergleichen, um einen möglichen Defekt zu erkennen. Dabei wird angenommen, dass ein solcher Defekt bei nur einer Phase auftritt.

Ebenso ist bekannt, die Temperaturerhöhung gegenüber der Umgebungstemperatur mit dem quadratischen Strom mit einer linearen Gleichung in Bezug zu setzen. Anschließend wird zur Zustandsbewertung die Änderung der linearen Gleichung betrachtet.

Nachteilig an den bekannten Verfahren ist, dass Vergleiche der Temperatur zwischen Phasen eine symmetrische Strombelastung voraussetzen und der Einfluss mancher Fehler auf die absolute Temperatur gering ist, sodass die Fehlererkennung schwierig ist.

Es ist Aufgabe der Erfindung, ein verbessertes Verfahren zur Zustandsbestimmung für eine Schaltanlage und eine entsprechende verbesserte Schaltanlage anzugeben.

Diese Aufgabe wird durch eine Schaltanlage mit den Merkmalen von Anspruch 1 gelöst.

Bei dem erfindungsgemäßen Betriebsverfahren für eine Schaltanlage wird ein Temperaturverlauf aus dem Signal eines in der Schaltanlage angeordneten Temperatursensors aufgenommen. Weiterhin wird durch einen Fit des Temperaturverlaufs an eine Funktion, die den Temperaturverlauf modelliert, eine thermische Zeitkonstante für Temperaturänderungen am Temperatursensor ermittelt. Schließlich wird ein Alarmsignal erzeugt, wenn die thermische Zeitkonstante kleiner als ein Referenzwert ist.

Die erfindungsgemäße Schaltanlage umfasst einen Temperatursensor und eine Auswerteeinrichtung, wobei die Auswerteeinrichtung ausgestaltet ist, das Verfahren durchzuführen. Die Auswerteeinrichtung ist also ausgestaltet, einen Temperaturverlauf aus dem Signal des Temperatursensors aufzunehmen und aus einem Fit des Temperaturverlaufs an eine Funktion, die den Temperaturverlauf modelliert, eine thermische Zeitkonstante für Temperaturänderungen am Temperatursensor zu ermitteln. Weiterhin ist sie ausgestaltet, ein Alarmsignal zu erzeugen, wenn die thermische Zeitkonstante kleiner als ein Referenzwert ist.

Bei der Schaltanlage kann es sich um eine luftisolierte Schaltanlage (AIS) oder um eine gasisolierte Schaltanlage (GIS).

Vorteilhaft werden also bei der vorliegenden Erfindung nicht die Absolutwerte von Temperaturen verglichen, sondern die ermittelten Zeitkonstanten, mit denen eine Anpassung der Temperatur nach einer Änderung der thermischen Einflüsse, insbesondere nach einer Stromänderung, stattfinden. Dadurch, dass diese mit einem Fit an eine Funktion ermittelt werden, werden automatisch Signalrauschen und andere statistische Einflüsse minimiert. Weiterhin sind die Zeitkonstanten auch bei kleinen Änderungen der thermischen Einflüsse sichtbar und nicht abhängig davon, dass die Strombelastung verschiedener Phasen symmetrisch ist.

Vorteilhafte Ausgestaltungen des erfindungsgemäßen Verfahrens und der erfindungsgemäßen Schaltanlage gehen aus den abhängigen Ansprüchen hervor. Dabei kann die Ausführungsform der unabhängigen Ansprüche mit den Merkmalen eines der abhängigen Ansprüche oder vorzugsweise auch mit denen aus mehreren abhängigen Ansprüchen kombiniert werden. Demgemäß können noch zusätzlich folgende Merkmale vorgesehen werden:
Die Zeitkonstante kann ein Mittelwert von mehreren ermittelten Zeitkonstanten sein. Diese werden über einen Zeitraum hinweg wiederholt bestimmt. Dadurch wird vorteilhaft der Einfluss von Signal-Störungen auf das Ergebnis vermindert.

Als Referenzwert kann ein festlegbarer Schwellwert verwendet werden. Dieser Schwellwerte kann vorab festgelegt werden anhand von Untersuchungen bei der Auslegung der Schaltanlage. Alternativ kann als Schwellwert auch eine im laufenden Betrieb einer neu eingerichteten Schaltanlage ermittelte Zeitkonstante festgehalten und verwendet werden. Ein fester Schwellwert ermöglicht vorteilhaft eine absolute Aussage über den Zustand der Schaltanlage.

Alternativ kann als Referenzwert eine Zeitkonstante einer anderen Phase der Schaltanlage verwendet werden. In diesem Fall werden die Zeitkonstanten mehrerer Phasen der Schaltanlage ermittelt. Dafür ist es zweckmäßig, wenn für jede der Phasen ein Temperatursensor vorhanden ist. Da es unwahrscheinlich ist, dass zwei oder gar drei Phasen gleichermaßen fehlerhaft sind, zeigt ein Vergleich der Zeitkonstanten vorteilhaft eine Fehlersituation an einer der Phasen, ohne dass ein absoluter Schwellwert notwendig ist. Ebenso wie verschiedene Phasen können auch verschiedene, insbesondere benachbarte Schaltfelder der Schaltanlage mit Temperatursensoren versehen sein und in der beschriebenen Weise die Zeitkonstanten verglichen werden. Vorteilhaft ist es dabei, wenn die Schaltfelder eine ausreichende Ähnlichkeit mit dem betrachteten Schaltfeld haben, wobei die Ähnlichkeit in Design, Aufstellort und angeschlossenen Kabelsysteme besteht.

Es ist auch möglich, als Referenzwert einen Mittelwert der Zeitkonstanten mehrerer oder aller vorhandenen Phasen der Schaltanlage zu verwenden. In diesem Fall werden zweckmäßig auch alle diese Zeitkonstanten ermittelt, wofür die Schaltanlage zweckmäßig pro Phase einen Temperatursensor umfasst. Dadurch wird ein Vergleich mit stets aktuellen Werten der Zeitkonstanten ermöglicht und so ein deutliches Abweichen einer Zeitkonstante von den anderen detektiert.

Die Funktion kann den Temperaturverlauf unter der Annahme beschreiben, dass der Temperatursensor über ein thermisches Netzwerk erster Ordnung mit einer thermischen Masse und einem thermischen Widerstand mit einer Umgebungstemperatur verbunden ist. Dadurch ergibt sich eine verhältnismäßige einfache Gleichung mit nur wenigen freien Parametern, die durch den durchgeführten Fitvorgang zu bestimmen sind. Dies ist vorteilhaft, falls der Temperatursensor sich in direktem guten thermischen Kontakt mit den stromführenden Komponenten befindet, beispielsweise direkt auf dem Kupfer der stromführenden Komponenten angebracht ist.

Alternativ kann die Funktion den Temperaturverlauf unter der Annahme beschreiben, dass der Temperatursensor über ein thermisches Netzwerk zweiter Ordnung mit einer Serie aus zwei Gliedern erster Ordnung mit jeweils einer thermischen Masse und einem thermischen Widerstand mit einer Umgebungstemperatur verbunden ist. Hierdurch ergibt sich eine Funktion mit zwei Zeitkonstanten, die tatsächliche Verläufe besser beschreibt und einen genaueren Fitvorgang erlaubt. Dies ist vorteilhaft, wenn der Temperatursensor nur über ein weiteres Material wie einen Hochspannungsisolator indirekten thermischen Kontakt zu den gut wärmeleitenden sowie stromführenden Komponenten hat.

Die Umgebungstemperatur kann mit einem weiteren Temperatursensor gemessen werden. Dadurch wird der Fitvorgang verbessert, da einer der freien Fitparameter durch einen Messwert ersetzt werden kann. Auch werden mögliche Fehler in der Auswertung bei veränderlicher Umgebungstemperatur vermieden.

Die Stromstärke in der Schaltanlage, insbesondere die Stromstärke einer Phase oder in mehreren Phasen in der Schaltanlage kann gemessen werden. Hierdurch stehen weitere Messwerte für den Fitvorgang zur Verfügung. Die Stromstärke sorgt über elektrische Verluste für den Wärmeeintrag, der bei einer Stromänderung zu einer Temperaturänderung mit Zeitkonstante führt. Vorteilhaft ist es, wenn die Schaltanlage einen Temperatursensor für jede Phase aufweist.

Bevorzugt wird auf einen Empfang des Alarmsignals hin eine Sicherheitsmaßnahme durchgeführt. Dabei kann es sich beispielsweise um ein Reduzieren eines durch die Schaltanalage, insbesondere durch eine betroffene Phase fließenden Stromes, ein Abschalten der Schaltanlage oder das Veranlassen einer Wartungsmaßnahme handeln. Beispielsweise kann die Dringlichkeit oder der Grad der Sicherheitsmaßnahme von dem Maß der Abweichung unter den Referenzwert abhängig gemacht werden.

Die Schaltanlage kann eine Phase oder mehrere Phasen, insbesondere drei Phasen umfassen und kann weiterhin einen Temperatursensor für jede Phase umfassen.

Der Temperatursensor oder die Temperatursensoren sind bevorzugt ausgebildet, Temperaturen von Schraubenverbindungen zu messen. Sie sind dafür bevorzugt nahe an solchen Schraubenverbindungen angeordnet. Da thermische Zeitkonstanten der thermischen Anpassung bestimmt werden, ist es nicht notwendig, dass die Temperatursensoren direkt an den Schraubverbindungen angeordnet sind, es ist aber zweckmäßig, wenn sie so nahe an diesen angeordnet sind, dass der thermische Einfluss eines Fehlers an der Schraubverbindungen den Einfluss anderer Schraubverbindungen, beispielsweise derjenigen von anderen Phasen, deutlich überwiegt.

Die Temperatursensoren können beispielsweise an einer Sammelschienenverbindung, einer Kabelverbindung, einem oberen **Ab**gang, einem unteren Abgang oder an einer Durchführung angeordnet sein.

Alternativ zu einer Auswertung, also einer Durchführung des Fitvorgangs in der Schaltanlage selbst ist es auch möglich, dass die Schaltanlage mit einem abseits der Schaltanlage, insbesondere als Cloud-Service ausgestalteten Computersystem, gekoppelt ist. Dabei ist die Schaltanlage zweckmäßig ausgestaltet zur Übermittlung der vorhandenen Messwerte, also zumindest des Temperaturverlaufs, an das Computersystem. Das Computersystem wiederum ist ausgestaltet, den Fitvorgang unter Verwendung von wenigstens dem Temperaturverlauf vorzunehmen. Vorteilhaft ist dabei, dass die Daten zentral verarbeitet werden und die Rechen- und Speicherkapazität im Computersystem typischerweise vielfach höher ist als in einer Schaltanlage, da Schaltanlagen üblicherweise bestenfalls mit einem Mikrocontroller ausgestattet sind, wohingegen Computersysteme mit Mikroprozessoren arbeiten.

Im Folgenden wird die Erfindung anhand der in den Figuren dargestellten Ausführungsbeispiele näher beschrieben und erläutert. Es zeigen:

Figur 1 eine luftisolierte Schaltanlage mit einem Temperatursensor,

Figur 2 ein thermisches Modell für die Schaltanlage,

Figur 3 Messdaten des Temperatursensors und ein Fit an die Messdaten,

Figur 4 einen T-Stecker einer Schaltanlage mit Platzierungsmöglichkeiten für einen Temperatursensor.

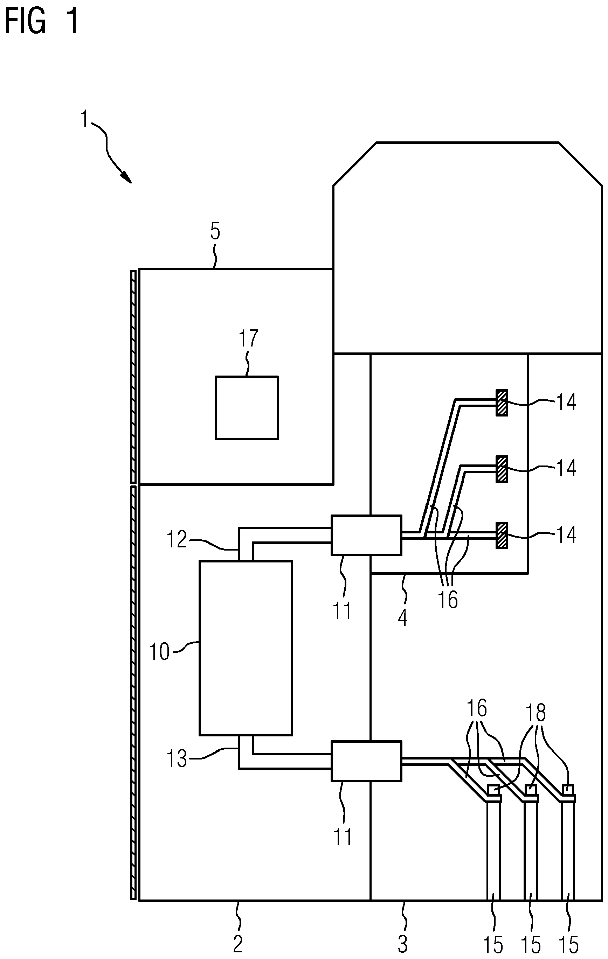

Fig. 1 zeigt ein Ausführungsbeispiel einer Schaltanlage 1 in einer Querschnittsdarstellung. Die Schaltanlage 1 ist vorliegend als luftisolierte Schaltanlage ausgeführt, die Erfindung kann jedoch auch auf gasisolierte oder sonstige Schaltanlagen der Nieder-, Mittel- oder Hochspannungstechnik angewendet werden.

Die Schaltanlage 1 von Fig. 1 besitzt vier verschiedene Räume, die voneinander durch Trennwände abgetrennt sind. Ein Sammelschienenraum 4 beherbergt einen Satz von Sammelschienen 14 (gewöhnlich eine Schiene pro Phase des Energienetzes), über die elektrische Energie zwischen mehreren nebeneinander angeordneten Schaltanlagen verteilt wird. Die jeweiligen Sammelschienenräume 4 können dabei direkt miteinander verbunden sein und somit einen gemeinsamen Sammelschienenraum bilden oder voneinander abgetrennt sein.

Die in dem Sammelschienenraum 4 angeordneten Sammelschienen 14 sind über Verbindungsleiter 16 mit oberen Abgängen 12 eines in einem Geräteraum 2 befindlichen Schaltgerätes 10 verbunden, wobei beispielsweise sogenannte Kontakttulpen oder Fingerkontakte zur Bereitstellung von lösbaren Kontakten für eine einfache Austauschbarkeit des Schaltgerätes 10 verwendet werden können. Als Schaltgerät 10 können beispielsweise Leistungsschalter, Lastschalter, Kurzschließer, Erdungsschalter, Sicherungen und dergleichen mehr zum Einsatz kommen.

Untere Abgänge 13 des Schaltgerätes 10 sind in entsprechender Weise über Verbindungsleiter 16 mit in einem Kabelanschlussraum 3 befindlichen Kabeln 15 verbunden, die als Eingänge oder Ausgänge der von der Schaltanlage 1 verteilten elektrischen Energie dienen können.

Die Verbindungsleiter 16 werden dabei über Durchführungen 11 zwischen dem Geräteraum 2 einerseits und dem Sammelschienenraum 4 beziehungsweise dem Kabelanschlussraum 3 elektrisch mit dem Schaltgerät 10 verbunden.

Ein Niederspannungsraum 5 kann Steuerelektronik, Mess- und Meldegeräte und andere derartige Niederspannungs-Hilfsgeräte aufnehmen. Diese Niederspannungs-Hilfsgeräte können Messwerte von den verschiedenen stromführenden und spannungstragenden Komponenten einlesen und für Steuer- und Schutzzwecke an entfernte Vorrichtungen weiterleiten und/oder lokal anzeigen und/oder automatisiert auswerten. Zur Bereitstellung solcher Messwerte werden üblicherweise an den Sammelschienen und den Kabeln befestigte Strom- und Spannungswandler vorgesehen, deren Messausgänge mit den Niederspannungs-Hilfsgeräte verbunden sind.

Die Verbindungen zwischen den oberen und unteren Abgängen 12, 13 und dem Schaltgerät 10, zwischen den oberen und unteren Abgängen 12, 13 und den Durchführungen 11, zwischen den Durchführungen 11 und den Verbindungsleitern 16 sowie zwischen den Verbindungsleitern 16 und den Sammelschienen 14 beziehungsweise den Kabeln 15 können unter Verwendung von kraftschlüssigen Verbindungen wie Schraub- oder Klemmverbindungen vorgenommen werden. An diesen Punkten kann es daher zu erhöhter Wärmeentwicklung kommen, wenn die Qualität eines derart hergestellten elektrischen Kontaktes zu gering ist.

Daher ist in diesem Beispiel ein Temperatursensor 18 im Kabelanschlussraum 3 nahe einer Schraubverbindung angeordnet. Der Temperatursensor 18 ist mit einer Auswerteeinheit 17 kommunikativ verbunden, die in diesem Fall als Teil der Schaltanlage 1 gezeigt ist. Die Auswerteeinheit 17 ist vorliegend im Niederspannungsraum 5 angeordnet und kann Teil eines sonstigen Niederspannungs-Hilfsgeräts sein.

In anderen Ausführungsformen kann die Funktionalität der Auswerteeinheit 17 auch außerhalb der Schaltanlage 1 angeordnet sein, beispielsweise in einem davon getrennt vorliegenden Computer oder in einem Cloud-Service. In allen Fällen liegt eine wenigstens indirekte Datenverbindung zwischen dem Temperatursensor 18 und der Auswerteeinheit 17 vor, durch die Messwerte des Temperatursensors 18 an die Auswerteeinheit 17 übertragen werden können.

Die kommunikative Verbindung zwischen dem Temperatursensor 18 und der Auswerteeinheit 17 kann über eine elektrische oder optische Datenleitung, eine drahtlose Kommunikationsverbindung oder über eine Nahfeldkommunikation verwirklicht sein. In letztgenanntem Fall wird der Temperatursensor 18 über nicht dargestellte Antennen im Kabelanschlussraum 3 der Schaltanlage 1 elektromagnetisch angeregt und anhand ihrer Reaktion auf die elektromagnetische Anregung ausgelesen. Dies bietet den Vorteil, dass der Temperatursensor 18 galvanisch getrennt von der Auswerteeinheit 17 und zudem ohne Batterien für die Versorgung einer drahtlosen Kommunikationsverbindung aufgebaut werden kann.

Ändert sich der durch die Schaltanlage 1 fließende Strom, dann ändert sich auch die in der Schaltanlage auftretende Verlustleistung gemäß $P_v = I^2 * R$, wobei I der fließende Strom ist und R die in der Schaltanlage 1 vorhandenen elektrischen Widerstände. Dadurch ändert sich die Temperatur in der Schaltanlage 1, was sich im Sensorsignal des Temperatursensors 18 bemerkbar macht. Die gesamte Schaltanlage 1 bildet dabei ein komplexes thermisches System, in dem sich Temperaturänderungen ausbreiten. Am schnellsten im Signal des Temperatursensors 18 sichtbar sind dabei solche Temperaturänderungen, die nahe beim Temperatursensor 18 auftreten, also insbesondere Temperaturänderungen durch die Schraubverbindung, in deren direkter Nähe der Temperatursensor 18 angeordnet ist.

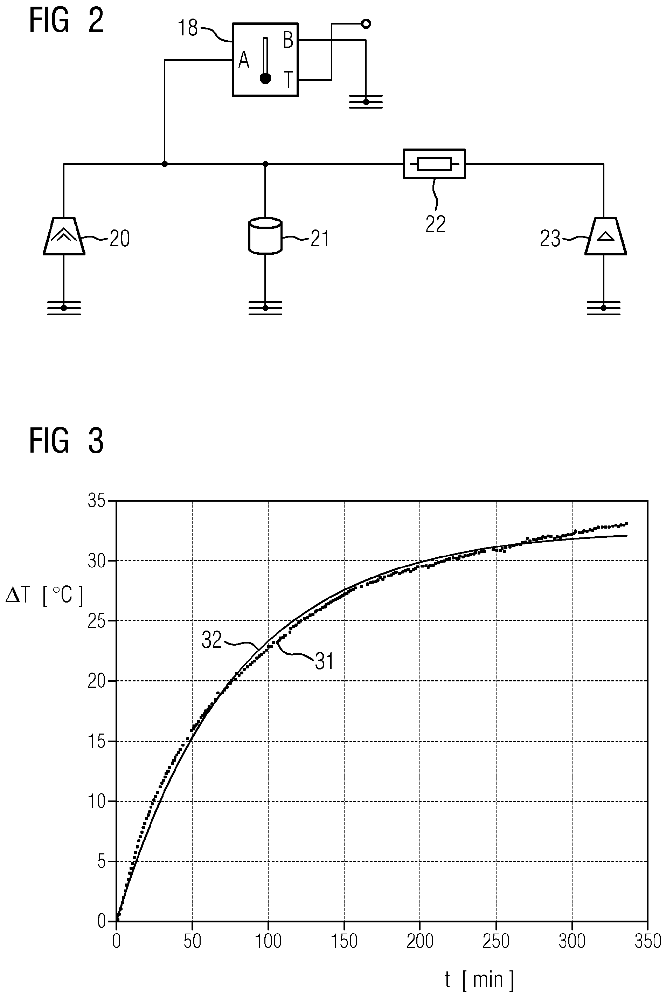

Typische Zeitkonstanten, mit denen sich die Temperatur nach einer Stromänderung anpasst, betragen etwa 1 h. Ist die betrachtete Schraubverbindung fehlerhaft und sorgt für einen erheblichen zusätzlichen Wärmeeintrag, dann äußert sich das in einer verringerten Zeitkonstante der Temperaturänderung. Um die Zeitkonstante zu bestimmen, führt die Auswerteeinheit 17 einen Fit der Messdaten des Temperatursensors 18 an einen funktionalen Zusammenhang durch. Der funktionale Zusammenhang ergibt sich dabei aus einem Modell, das in Figur 2 dargestellt ist. Bei diesem Modell wird die Superposition vieler thermischer Zeitkonstanten und Verlustleistungen zu einer einfachen Modellstruktur mit einer einzelnen Wärmequelle vereinfacht, die über ein thermisches Netzwerk erster Ordnung mit einem RC-Glied aus einer thermischen Masse 21 und einem thermischen Widerstand 22 mit der Außentemperatur 23 als Wärmesenke verbunden ist. Im Fehlerfall wird die Superposition durch die fehlerhafte Schraubverbindung 20 dominiert.

In einer alternativen Ausführung wird ein thermisches Netzwerk zweiter Ordnung verwendet, das zwei serielle RC-Glieder umfasst. Zu der thermischen Masse 21 und dem thermischen Widerstand 22 kommen dabei eine zweite thermische Masse und ein zweiter thermischer Widerstand. Dadurch ergibt sich ein veränderter Verlauf der Temperatur. In manchen Ausführungen kann dieser Verlauf den real gemessenen Verlauf besser wiedergeben und erlaubt daher einen verbesserten Fitvorgang.

Für das thermische Netzwerk erster Ordnung wie in Figur 2 gezeigt ergibt sich folgender Zusammenhang:

$$T_{Amb}(t) = \tau \cdot \dot{T}(t) + T(t) - P_{Loss}(t) \cdot R$$

Dabei sind $T_{Amb}$ die Umgebungstemperatur 23, T die Sensortemperatur, $P_{Loss}$ die an der Schraubverbindung auftretende Verlustleistung und R die Größe des thermischen Widerstands 22. Der Parameter $\tau$ ist die gesuchte Zeitkonstante der Temperaturanpassung. Es ist ersichtlich, dass sich bei konstanter Außentemperatur und konstanter Verlustleistung nach einer stufenförmigen Änderung der Verlustleistung ein exponentieller Verlauf der Temperatur T ergibt. Es kann aber nicht generell davon ausgegangen werden, dass diese Werte konstant sind.

Bei manchen Schaltanlagen 1 kann ein Sensor für die Außentemperatur vorliegen, wodurch der Parameter $T_{Amb}$ bekannt ist. Auch der Parameter $P_{Loss}$ kann zumindest teilweise bekannt sein, wenn Daten zum Stromfluss vorliegen. Unabhängig vom Vorliegen solcher zusätzlicher Daten kann aber ein Fit an die Messdaten des Temperatursensors 18 vorgenommen werden, um eine Zeitkonstante zu erhalten. Für diesen Fitvorgang muss kein bestimmter Zeitpunkt abgewartet werden, sondern der Fit kann laufend vorgenommen werden in einem rollenden Zeitfenster der Messdaten.

Figur 3 zeigt eine Reihe von Messdaten 31 und das Ergebnis eines Fitvorgangs an diese Messdaten in Form eines Verlaufs 32 der gefitteten Funktion, wobei der Fit hier die oben angegebene Formel für ein thermisches Netzwerk erster Ordnung verwendet.

Die sich ergebenden absoluten Werte für die Zeitkonstante hängen von der konkreten Schaltanlage 1 ab. In Versuchen hat sich gezeigt, dass die Werte bei fehlerfreien Schraubverbindungen im Bereich von 60 bis 70 Minuten liegen, während sie bei fehlerhaften Schraubverbindungen auf etwa die Hälfte fallen. Die absolute Größe einer Zeitkonstante kann daher als Kriterium verwendet werden, ob ein Fehler vorliegt. Dazu wird ein Vergleich der Zeitkonstante mit einem vorgegebenen Schwellwert von beispielsweise 45 Minuten vorgenommen. Wird dieser unterschritten, wird ein Alarmsignal ausgelöst und/oder eine Sicherheitsmaßnahme wie eine Abschaltung vorgenommen.

Neben einem Vergleich mit einem absoluten Schwellwert kann auch der Verlauf von ermittelten Zeitkonstanten betrachtet werden, um einen Fehler zu ermitteln. Sinkt die Zeitkonstante mit der Zeit deutlich ab, beispielsweise auf 2/3 ihres Anfangswerts, kann von einem Fehler ausgegangen werden und somit ein Alarmsignal ausgelöst und/oder eine Sicherheitsmaßnahme wie eine Abschaltung vorgenommen werden.

Die Schaltanlage 1 kann in einer weiteren Ausführungsform auch eine Mehrzahl von Temperatursensoren 18 aufweisen. Diese können beispielsweise an zueinander analogen Orten verschiedener Phasen angeordnet sein. Beispielsweise kann eine dreiphasige Schaltanlage 1 drei Temperatursensoren 18 umfassen, die nahe einer Schraubverbindung für die jeweilige Phase angeordnet sind. Je nach Aufbau der Schaltanlage 1 sind die Temperatursensoren 18 dabei nahe beieinander angeordnet oder entfernt voneinander angeordnet.

Bei dieser Schaltanlage 1 werden nun drei Fitvorgänge vorgenommen. In einen Fitvorgang für einen Temperatursensor 18, also eine Phase, gehen dabei die Messwerte des jeweiligen Temperatursensors 18 ein. Dabei können bestimmte Parameter als gleich für alle drei Fitvorgänge angesehen werden, beispielsweise die Umgebungstemperatur.

In einer Versuchsreihe mit einer Schaltanlage wurden die Zeitkonstanten in einem ersten Durchlauf mit unbeschädigten Schraubverbindungen bestimmt und in einem zweiten Durchlauf wurde eine der Schraubverbindung absichtlich beschädigt. Dabei haben sich bei verschiedenen Werten für die Stromauslastung die folgenden Werte für Zeitkonstanten ergeben.

Bei 25% des Nennstroms:

|  | Phase 1 | Phase 2 | Phase 3 |
|---|---|---|---|
| Normal | 74 min | 70 min | 62 min |

(fortgesetzt)

|  | Phase 1 | Phase 2 | Phase 3 |
|---|---|---|---|
| L1 beschädigt | 34 min | 70 min | 76 min |

Bei 50% des Nennstroms:

|  | Phase 1 | Phase 2 | Phase 3 |
|---|---|---|---|
| Normal | 87 min | 73 min | 74 min |
| L1 beschädigt | 31 min | 53 min | 59 min |

Bei 100% des Nennstroms:

|  | Phase 1 | Phase 2 | Phase 3 |
|---|---|---|---|
| Normal | 76 min | 101 min | 92 min |
| L1 beschädigt | 32 min | 55 min | 70 min |

Es ist erkennbar, dass die Zeitkonstante der beschädigten Phase bei jedem der Stromwerte deutlich niedriger ausfällt als die Zeitkonstanten der unbeschädigten Phasen. Der thermische Einfluss der nahe am Temperatursensor 18 Schädigung ist also deutlich sichtbar.

Wiederum kann das Alarmsignal durch einen Vergleich von so ermittelten Zeitkonstanten mit einem Schwellwerte ausgelöst werden, beispielsweise einem Schwellwert von 50 Minuten oder 45 Minuten. Alternativ kann in diesem Beispiel auch ein Vergleich zwischen den Phasen durchgeführt werden. Bei 25% des Nennstroms ergibt ein Vergleich der Werte für die Phasen, dass die Zeitkonstanten der unbeschädigten Phasen um weniger als 10% von ihrem Mittelwert abweichen. Im Falle der beschädigten ersten Phase weicht deren Zeitkonstante um mehr als 40% vom Mittelwert der Zeitkonstanten ab. Bei einer Abweichung von beispielsweise mehr als 25% oder mehr als 35% kann also von einem Fehler ausgegangen werden. Dadurch ist kein absoluter Schwellwert erforderlich.

Neben einem einzelnen Schwellwert für die Zeitkonstanten, der eine Anzahl von Minuten oder eine relative Änderung angeben kann, können auch mehrere Schwellwerte zum Einsatz kommen, die für verschiedene Schweregrade der Beschädigung stehen. Je nachdem, welcher der Schwellwerte durch die Zeitkonstante verletzt wird, kann nur ein Alarmsignal ausgelöst werden als schwächste Reaktion oder aber als stärkere Reaktion auch eine Abschaltung bei einem sehr starken Fehler.

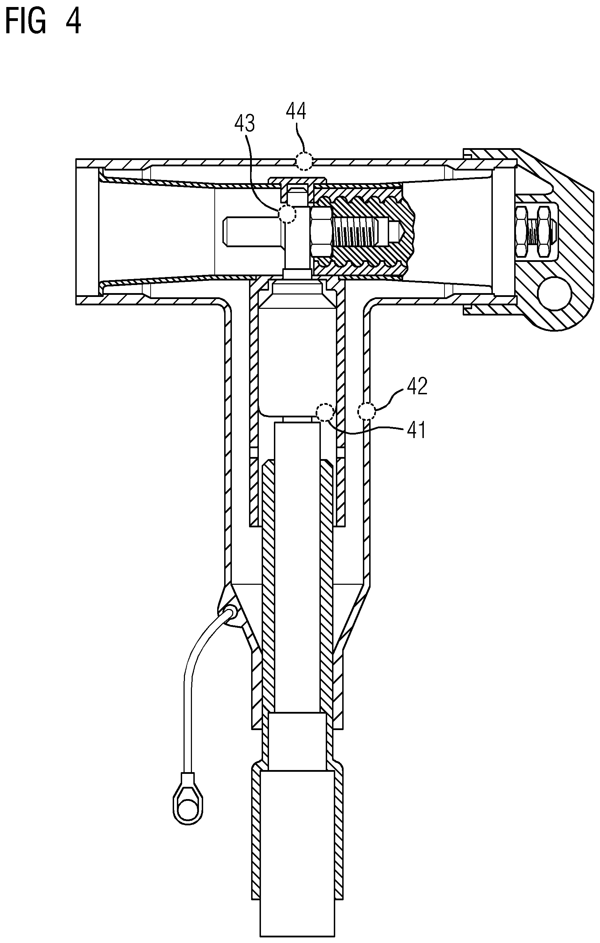

Bei einer gasisolierten Schaltanlage kann ein Temperatursensor unter anderem an oder in einem T-Stecker angeordnet werden. Figur 4 zeigt einen solchen T-Stecker 40 im Schnittbild mit einer Mehrzahl von möglichen Positionen 41...44 für den Temperatursensor 18. Die Positionen unterschieden sich dabei durch ihre Distanz von der Schraubverbindung und somit der Zeitlichen Reaktion auf Stromänderung. Bei einer Position, die einem möglichen Fehler sehr nahe ist wie beispielsweise Position 43 kann die thermische Reaktion sehr gut mit einem thermischen Netzwerk erster Ordnung beschrieben werden, während bei einer weiter vom Fehler entfernten Position wie der Position 42 ein thermisches Netzwerk zweiter Ordnung den Temperaturverlauf besser darstellt.

Bezugszeichen

| 1 | luftisolierte Schaltanlage |
|---|---|
| 2 | Geräteraum |
| 3 | Kabelanschlussraum |
| 4 | Sammelschienenraum |
| 5 | Niederspannungsraum |
| 10 | Schaltgerät |

| 11 | Durchführungen |
|----|----|
| 12 | oberer Abgang |
| 13 | unterer Abgang |
| 14 | Sammelschiene |
| 15 | Kabel |
| 16 | Verbindungsleiter |
| 17 | Auswerteeinheit |
| 18 | Temperatursensor |
| 20 | Schraubverbindung |
| 21 | thermische Masse |
| 22 | thermischer Widerstand |
| 23 | Außentemperatur |
| 31 | Messdaten |
| 32 | gefitteter Verlauf |
| 40 | T-Stecker |
| 41...45 | Positionen für den Temperatursensor |

**Patentansprüche**

1. Verfahren zum Betreiben einer Schaltanlage (1), bei dem

   - ein Temperaturverlauf (31) aus dem Signal eines in der Schaltanlage (1) angeordneten Temperatursensors (18) aufgenommen wird,
   - ein Alarmsignal erzeugt wird,

   **dadurch gekennzeichnet dass** bei dem Verfahren

   - durch einen Fit einer Funktion (32) an den Temperaturverlauf (31), wobei die Funktion (32) den Temperaturverlauf modelliert, eine thermische Zeitkonstante für Temperaturänderungen am Temperatursensor (18) ermittelt wird,
   - das Alarmsignal erzeugt wird, wenn die thermische Zeitkonstante kleiner als ein Referenzwert ist.

2. Verfahren nach Anspruch 1, bei dem als Referenzwert ein festlegbarer Schwellwert verwendet wird.

3. Verfahren nach einem der vorangehenden Ansprüche, bei dem die Funktion (32) den Temperaturverlauf (31) unter der Annahme beschreibt, dass der Temperatursensor (18) über ein thermisches Netzwerk erster Ordnung mit einer thermischen Masse (21) und einem thermischen Widerstand (22) mit einer Umgebungstemperatur (23) verbunden ist.

4. Verfahren nach einem der Ansprüche 1 bis 2, bei dem die Funktion (32) den Temperaturverlauf (31) unter der Annahme beschreibt, dass der Temperatursensor (18) über ein thermisches Netzwerk zweiter Ordnung mit einer Serie aus zwei Gliedern erster Ordnung mit jeweils einer thermischen Masse (21) und einem thermischen Widerstand (22) mit einer Umgebungstemperatur (23) verbunden ist.

5. Verfahren nach einem der vorangehenden Ansprüche, bei dem die Umgebungstemperatur (23) mit einem weiteren Temperatursensor gemessen wird.

6. Verfahren nach einem der vorangehenden Ansprüche, bei dem die Stromstärke in der Schaltanlage (1), insbesondere die Stromstärke einer Phase in der Schaltanlage (1) gemessen wird.

7. Verfahren nach einem der vorangehenden Ansprüche, bei dem auf einen Empfang des Alarmsignals hin eine Sicherheitsmaßnahme durchgeführt wird.

8. Verfahren nach Anspruch 7, bei dem die Sicherheitsmaßnahme ein Reduzieren eines fließenden Stroms, ein Abschalten der Schaltanlage (1) oder das Veranlassen einer Wartungsmaßnahme umfasst.

9. Schaltanlage (1) mit einem Temperatursensor (18) und einer Auswerteeinrichtung (17), wobei die Auswerteeinrichtung (17) ausgestaltet ist, ein Verfahren nach einem der vorangehenden Ansprüche durchzuführen.

10. Schaltanlage (1) nach Anspruch 9 mit einer Mehrzahl von Phasen, insbesondere drei Phasen und einem Temperatursensor (18) für jede Phase.

11. Schaltanlage (1) nach Anspruch 9 oder 10, bei der der oder die Temperatursensoren (18) ausgebildet sind, Temperaturen von Schraubverbindungen zu messen.

12. Schaltanlage nach Anspruch 11, bei der der oder die Temperatursensoren (18) an einer Sammelschienenverbindung, einer Kabelverbindung, einem oberen Abgang (12), einem unteren Abgang (13) oder an einer Durchführung (11) angeordnet sind.

13. System mit einer Schaltanlage (1) nach einem der Ansprüche 9-12 und einem abseits der Schaltanlage (1), insbesondere als Cloud-Service ausgestalteten Computersystem, bei dem das Computersystem ausgestaltet ist zur Durchführung eines Verfahrens nach einem der Ansprüche 1 bis 8 und die Schaltanlage (1) ausgestaltet ist zur Übermittlung des Temperaturverlaufs (31) an das Computersystem.

**Claims**

1. Method for operating a switchgear installation (1), in which

    - a temperature curve (31) is recorded from the signal of a temperature sensor (18) arranged in the switchgear installation (1),
    - an alarm signal is generated, **characterized in that**, in the method,
    - a thermal time constant for temperature changes is determined at the temperature sensor (18) by fitting a function (32) to the temperature curve (31), wherein the function (32) models the temperature curve,
    - the alarm signal is generated when the thermal time constant is lower than a reference value.

2. Method according to Claim 1, in which a definable threshold value is used as the reference value.

3. Method according to either one of the preceding claims, in which the function (32) describes the temperature curve (31) on the assumption that the temperature sensor (18) is connected via a first-order thermal network to a thermal mass (21) and via a thermal resistance (22) to an ambient temperature (23).

4. Method according to any one of Claims 1 to 2, in which the function (32) describes the temperature curve (31) on the assumption that the temperature sensor (18) is connected via a second-order thermal network to a series of two first-order elements to in each case a thermal mass (21) and via a thermal resistance (22) to an ambient temperature (23).

5. Method according to any one of the preceding claims, in which the ambient temperature (23) is measured using an additional temperature sensor.

6. Method according to any one of the preceding claims, in which the current strength in the switchgear installation (1), in particular the current strength of a phase in the switchgear installation (1), is measured.

7. Method according to any one of the preceding claims, in which a safety measure is carried out in response to reception of the alarm signal.

8. Method according to Claim 7, in which the safety measure comprises reducing a flowing current, shutting down the switchgear installation (1) or initiating a maintenance measure.

9. Switchgear installation (1) having a temperature sensor (18) and an evaluation device (17), wherein the evaluation device (17) is designed to carry out a method according to any one of the preceding claims.

10. Switchgear installation (1) according to Claim 9 having a plurality of phases, in particular three phases, and a temperature sensor (18) for each phase.

11. Switchgear installation (1) according to Claim 9 or 10, in which the temperature sensor or sensors (18) are designed to measure temperatures of screw connections.

12. Switchgear installation according to Claim 11, wherein the temperature sensor or sensors (18) are arranged on a busbar connection, a cable connection, an upper outgoing circuit (12), a lower outgoing circuit (13) or on a bushing (11).

13. System having a switchgear installation (1) according to any one of Claims 9-12 and a computer system, designed in particular as a cloud service and separate from the switchgear installation (1), in which the computer system is designed to carry out a method according to any one of Claims 1 to 8 and the switchgear installation (1) is designed to transmit the temperature curve (31) to the computer system.

**Revendications**

1. Procédé pour faire fonctionner une installation (1) de coupure, dans lequel

    - on enregistre une courbe (31) de température à partir du signal d'une sonde (18) de température montée dans l'installation (1) de coupure,
    - on produit un signal d'alerte,
    **caractérisé en ce que** dans le procédé
    - par un fit d'une fonction (32) à la courbe (31) de température, la fonction (32) modélisant la courbe de température, on détermine une constante de temps thermique pour des variations de température à la sonde (18) de température,
    - on produit le signal d'alerte, si la constante de temps thermique est plus petite qu'une valeur de référence.

2. Procédé suivant la revendication 1, dans lequel on utilise une valeur de seuil pouvant être déterminée comme valeur de référence.

3. Procédé suivant l'une des revendications précédentes, dans lequel la fonction (32) décrit la courbe (31) de température, en faisant l'hypothèse que la sonde (18) de température est, par un réseau thermique du premier ordre, reliée à une masse (21) thermique et à une résistance (22) thermique ayant une température (23) ambiante.

4. Procédé suivant l'une des revendications 1 à 2, dans lequel la fonction (32) décrit la courbe (31) de température, en faisant l'hypothèse que la sonde (18) de température est, en passant par un réseau thermique du deuxième ordre ayant une série de deux membres du premier ordre, reliée à respectivement une masse (21) thermique et une résistance (22) thermique ayant une température (23) ambiante.

5. Procédé suivant l'une des revendications précédentes, dans lequel on mesure la température (23) ambiante par une autre sonde de température.

6. Procédé suivant l'une des revendications précédentes, dans lequel on mesure l'intensité du courant dans l'installation (1) de coupure, en particulier l'intensité du courant d'une phase dans l'installation (1) de coupure.

7. Procédé suivant l'une des revendications précédentes, dans lequel on prend une mesure de sécurité à la réception du signal d'alerte.

8. Procédé suivant la revendication 7, dans lequel la mesure de sécurité comprend une réduction du courant qui passe, un arrêt de l'installation (1) de coupure ou la mise en œuvre d'une mesure d'entretien.

9. Installation (1) de coupure comprenant une sonde (18) de température et un dispositif (17) d'évaluation, dans lequel le dispositif (17) d'évaluation est conformé pour effectuer un procédé suivant l'une des revendications précédentes.

10. Installation (1) de coupure suivant la revendication 9, comprenant une pluralité de phases, en particulier trois phases et une sonde (18) de température pour chaque phase.

11. Installation (1) de coupure suivant la revendication 9 ou 10, dans laquelle la ou les sondes (18) de température sont constituées pour mesurer des températures de raccords vissés.

12. Installation de coupure suivant la revendication 11, dans laquelle la ou les sondes (18) de température sont disposées sur une connexion par rail collecteur, une connexion par câble, une sortie (12) supérieure, une sortie (13) inférieure ou une traversée (11).

13. Système comprenant une installation (1) de coupure, suivant l'une des revendications 9 à 12, et un système informatique à part de l'installation (1) de coupure, en particulier conformé en service de nuage, dans lequel le système informatique est conformé pour effectuer un procédé suivant l'une des revendications 1 à 8 et l'installation (1) de coupure est conformée pour la transmission de la courbe (31) de température au système informatique.

FIG 1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   US 20170148300 A1